**Europäisches Patentamt**

**European Patent Office**

**Office européen des brevets**

(11) Publication number: **0 094 994**
**B1**

# EUROPEAN PATENT SPECIFICATION

(45) Date of publication of patent specification: **29.04.87**

(51) Int. Cl.⁴: **B 01 D 33/08**

(21) Application number: **82302615.8**

(22) Date of filing: **21.05.82**

(54) Improved rotary drum filter.

(43) Date of publication of application:
**30.11.83 Bulletin 83/48**

(45) Publication of the grant of the patent:
**29.04.87 Bulletin 87/18**

(84) Designated Contracting States:
**DE FR IT NL**

(56) References cited:
**GB-A- 531 795**
**GB-A-1 091 726**
**GB-A-1 315 549**
**US-A-3 262 575**
**US-A-3 291 682**
**US-A-3 363 774**

(73) Proprietor: **Exxon Research and Engineering Company**
**P.O.Box 390 180 Park Avenue**
**Florham Park New Jersey 07932 (US)**

(72) Inventor: **Leighton, Milton Dale**
**99 Riverside Drive**
**Florham Park New Jersey (US)**
Inventor: **Ryan, Douglas Giles**
**145 Andrea Drive**
**Rockaway New Jersey (US)**

(74) Representative: **Somers, Harold Arnold et al**
**ESSO Engineering (Europe) Ltd. Patents & Licences Apex Tower High Street**
**New Malden Surrey KT3 4DJ (GB)**

## Description

This invention relates to an improved continuous rotary drum vacuum filter means. More specificaly, the subject invention is related to a continuous rotary drum filter for the separation of petroleum liquids, such as lube oils, from solids, such as paraffins.

The separation of mixtures of compounds can be accomplished by various unit operations including distillation, solvent extraction and fractional crystallization. Fractional crystallization is particularly well-suited to the purification of many mixtures economically in a one-stage operation. Frequently, the crystallization operation is combined with another unit operation to produce an improved separation process. In petroleum processing, operations fractional crystallization is often utilized to separate waxy compounds from the lube oil fraction. Frequently, a solvent is added to the mixture to provide more favorable conditions for crystal growth and to dilute the resultant chilled slurry to thereby permit continuous oil-wax separation.

One type of filter particularly well suited to fractional crystallization, in general, and wax-lube oil separation, in particular, is the rotary drum filter. In this type filter, a filter drum continuously rotates within a filter vat containing the mixture to be separated. In one phase of the rotation, vacuum is applied to the filter drum causing a major portion of filtrate to be drawn through the filter cloth and fluid conduits, while the solids and a minor amount of filtrate are trapped by the filter cloth and build up to form a cake. A liquid solvent wash liquid is often then sprayed over the cake and drawn through the filter cloth and conduits to remove additional quantities of filtrate from the cake. During another phase of the rotation, high velocity gas is passed outwardly through the fluid conduits to purge the liquid filtrate and/or solvent and break the filter cake away from the cloth. During this purge cycle, liquid adhering to the walls of the conduits may be directed against sections of the filter cloth by the high velocity gas, thereby causing erosion of the filter cloth. Filter cloth replacement necessitates complete shutdown of the filter and is relatively expensive, since rotary filters frequently are thirty feet or more in length.

One method for minimizing the erosive effects of the liquid on the filter cloth has been to have an elongated purge cycle in which the lead fluid conduit in the direction of flow is evacuated while the lag conduit, or conduit immediately following the lead conduit, is purged with high velocity gas. Liquid purged out of the lag pipe is directed into the lead pipe before it can strike the filter cloth. At a predetermined point in the rotation, the vacuum is discontinued and the purge gas and any remaining liquid is directed outwardly. Extension of the time period during which the combination of purge and evacuation is accomplished would decrease the amount of liquid remaining in the lag fluid conduit when evacuation of the lead fluid is discontinued. However, this would require a decrease in the rotational speed of the filter drum and/or a decrease in the other filter drum cycle times. Either of these methods thus would decrease the filtration capacity of the unit.

Yet another method of decreasing the erosive effects of the liquid would be to use a thicker or more erosion-resistant filter cloth. Use of a thicker filter cloth would increase the filter cloth cost and also increase the tendency of the filter cloth to bow while also decreasing the filter capacity. In addition, the thicker the filter cloth, the more difficult it is to remove the wax fines from the cloth. Use of a more erosion-resistant filter cloth may not be advantageous, since a more erosion-resistant cloth may not have desirable filter cake discharge characteristics.

Other methods for decreasing the amount of liquid blown from the fluid conduits onto the filter cloth have been directed at the addition of liquid storage chambers by the use of a series of capped pipes or the like attached to the fluid conduits to trap the discharged liquid. United States Patents 2,321,230; 3,262,575; and 4,032,442 all are directed at individual liquid chambers attached to each fluid conduit. These devices have several disadvantages. Since the volume of residual liquid which may remain in each fluid conduit may be significant, these fluid chambers each should have a large capacity to trap all the liquid discharged. However, entrapping this residual liquid may result in undesirable deflection of the chambers unless relatively complex support mechanisms are provided. In addition, venting of the aforementioned devices may not be sufficient, resulting in incomplete drainage of the chambers during filter drum rotation. In addition, the aforementioned devices may not be easily retrofitted to rotary drum filters presently in use.

GB—A 1248673 describes and claims a rotary drum vacuum filter having a washing zone and a blow-off zone and internally compartmented at its periphery and having a leading duct and a trailing duct extending from the leading region and the trailing region, respectively, of each compartment, the filter including a control valve head which includes two annular conduits co-axial with each other and communicating with the leading ducts and the trailing ducts, respectively, and also includes separating bridges interposed in the conduits and movable deliberately along the conduits, without dismounting of said head being first required, to adjust the angular extensions of operational zones of the filter.

GB—A 1248673 also describes and claims a control valve head for a rotary drum vacuum filter, which filter has a washing zone and a blow-off zone and is internally compartmented at its periphery and has a leading duct and a trailing duct extending from each compartment, said head including two annular conduits co-axial with each other for communicating with the leading ducts and the trailing ducts, respectively, and separating bridges interposed in the conduits and movable deliberately along the conduits to adjust the angular extensions of operational zones of the filter, the arrangement being such that, with said head mounted in position on said filter, said bridges are movable deliberately along the conduits without dismounting of said head being first required. Preferably, one of said two annular conduits is disposed radially inwardly of the other, and preferably, the head comprises a control disc formed with holes for connecting said ducts with said conduits, at least one of said bridges comprising a plug which extends through a bore formed transversely in said conduit and engages in a liquid-tight manner in one of said holes, the arrangement being such that, with said head mounted in position on said filter, said plug is accessible, for the purpose of removing and replacing it, without dismounting of said head being first required.

GB—A 1315549 describes a continuous rotary drum vacuum filter comprising a drum rotatable about its own axis with cells defining the working surface of the drum, the outer walls of said cells being formed by a filtering material, said cells being connected by means of ducts to the movable part of a valve installed co-axially with the drum, the valve serving to connect the cells during rotation of the drum in the required sequence to suction and compressed air lines, and also a trough for a suspension into which the drum is partly submerged and a device for removing filter cake from the external surface of the filtering material, wherein the fixed part of the valve is provided with a filtrate transfer channel which is adapted to connect each cell emerging from the suspension during rotation of the drum with a cell submerging into the suspension, thereby providing for transfer of filtrate from the former cell into the latter one and the valve incorporating means to connect said cell submerging into the suspension to the compressed air line to effect reverse flow of the filtrate which has been thus transferred prior to said cell being connected to said suction line for filtering the suspension. Preferably, the cells are provided with accumulating pockets to increase the amount of filtrate used for reverse flow cleaning.

GB—A 1315549 also describes and claims a method of filtering a suspension using a rotary drum vacuum filter of the type having a drum rotatable about its own axis, with cells defining the working surface of the drum the outer walls of the cells being formed by a filtering material, the cells being connected by ducts to the movable part of a valve installed coaxially with the drum, the valve serving to connect the cells during rotation of the drum in the required sequence to suction and compressed air lines, the method comprising partially immersing said drum in the suspension to be filtered, rotating said drum about its own axis, drawing the suspension inwards through said filtering material into said cells where the cells pass through a zone of rotation below the level of the suspension, transferring filtrate from each cell which has just left said zone to a cell which is approaching said zone, through a filtrate transfer channel in the fixed part of the valve, and forcing the filtrate which has been thus transferred outwards through the filtering material of said latter cell by applying compressed air to said cell through said valve before said cell enters said zone.

It is a desirable objective to produce a modified rotary filter in which erosion of the filter cloth by entrained liquid is reduced or eliminated without decreasing the filter throughput or increasing the cost of replacement filter cloths.

It is also a desirable objective to have a rotary filter design which effectively traps residual liquid and which is relatively inexpensive and reliable.

It is also a desirable objective to have a rotary filter design which is easily adaptable to rotary filters currently in use for removing entrained liquid.

The present invention provides a continuous rotary drum vacuum filter means comprising:

(a) a filter vat for containing a filterable slurry of liquids and solids up to a selected level;

(b) a rotatable filter drum mounted with its axis horizontal for rotation about its axis with its upper part above the said selected level, the drum comprising a plurality of circumferentially-spaced filtering sectors or compartments each having a plurality of openings at the periphery of the drum;

(c) means to rotate the drum about its axis in a selected sense;

(d) each filtering sector or compartment of the drum having lead and lag conduits connected to respective sets of openings such that during rotation of the drum in the selected sense, the openings connected to a lead conduit of a sector arrive at a given point before the openings connected to the next successive lag conduit;

(e) valve means for regulating the sequence and duration of the connection of the lead and lag conduits with a source of reduced pressure, a source of raised pressure, and with atmospheric pressure at respective angular intervals during the rotation of the drum; and

(f) a plurality of liquid collection means, there being one liquid collection means adjacent to each axial end of the filter drum communicating with at least a majority of said lag fluid conduits for receiving liquid from said lag fluid conduits when a gas at a raised pressure is admitted to the lag fluid conduits at one selected rotational position or interval of the drum, characterized in that the liquid collection means communicates with vent means separately from its communication with the said lag conduits whereby liquid is dischargeable from the liquid collection means via the vent means under the influence of gas at a raised pressure at another selected rotational position or interval of the drum.

In a preferred embodiment of the subject invention the liquid collection means comprises a pair of liquid collection means, one being disposed at each end of the filter drum. Each collection means comprises a series of circumferentially disposed chambers, each chamber communicating with the terminus of a lag fluid conduit and having a venting means.

Figure 1 is an exploded isometric drawing of a typical rotary filter incorporating the subject invention.

Figure 2 is an enlarged simplified isometric view showing fluid conduits and the liquid collection means of the subject invention.

Figure 3 is a simplified cross-sectional view of a rotary filter indicating the operations performed during each rotation of the drum.

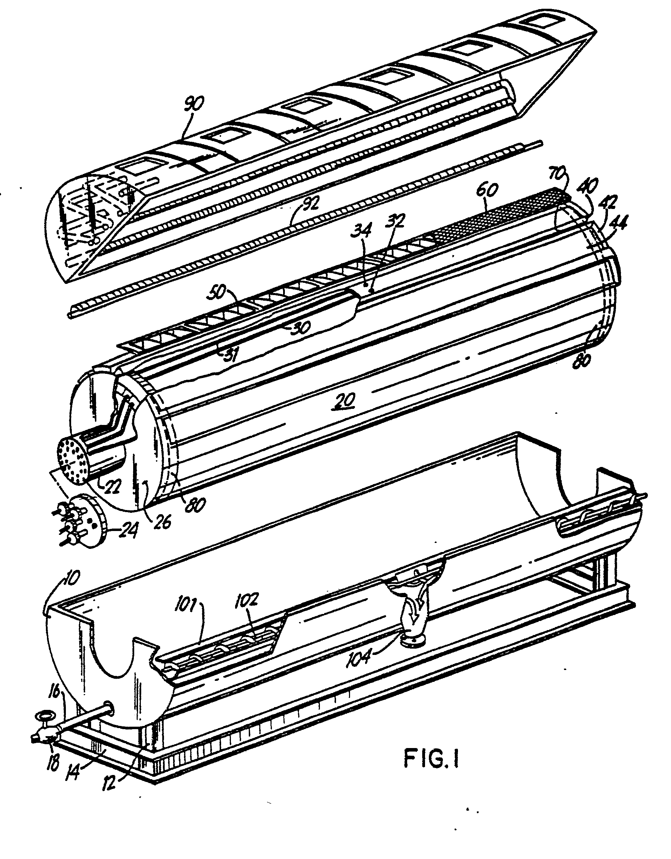

Referring to Figure 1, an exploded, simplified isometric assembly drawing of a typical rotary drum filter is shown. The filter includes a filter vat, generally indicated as 10 and a filter drum generally indicated as 20. Vat 10, having a substantially semicylindrical shape is supported by columns 12 above base 14. An inlet 16 communicates with vat 10 and with the source of the slurry to be separated (not shown). A level controller (not shown) usually is added to control the level of slurry in vat 10 by regulating valve 18 in inlet 16. A filter hood 90 having an overall semicylindrical shape has a plurality of perforated spray headers or drip pipes 92 disposed therein parallel to the axis of rotation of drum 20 to wash the wax cake formed in the drum as hereinafter described. Filter drum 20 is of a generally overall cylindrical shape having a diameter slightly less than that of the diameter of vat 10, such that drum 20 is rotatable about its axis in vat 10 on a pair of trunions 22. A series of uniformly spaced channel sections 40 extend outwardly from the curvilinear surface of drum 20 parallel to the axis of rotation. Terminal sections 42 disposed near the ends of drum 20 connect each section 40 to an adjacent channel section, to thereby define a series of segments 44 circumferentially disposed around drum 20. Each segment 44 has two series of circumferential openings through drum 20 evenly spaced along substantially the entire axial length of each segment to form circumferential rows with one series of openings 32 in general alignment with fluid conduit 30 and with the other series of openings 34 in general alignment with fluid conduit 31. In each segment 44 the leading opening 32 in the direction of rotation hereinafter is referred to as the lead opening while the immediately adjacent trailing opening 34 is referred to as the lag opening. Similarly, fluid conduit 30, communicating with opening 32, is referred to as the lead fluid conduit, while fluid conduit 31 communicating with lag opening 34 is referred to as the lag fluid conduit. One of the pair of trunions 22 has a plurality of holes each of which communicates with lead and lag fluid conduits 30, 31, respectively and with trunion valve means 24 to perform varying operations during each revolution of drum 20 as described hereinafter. The other trunion communicates with a conventional drum rotation means (not shown) to rotate drum 20 in vat 10. Each conduit 30, 31 extends along substantially the entire axial length of drum 20. Conduit 31 terminates in a liquid collection means 80.

A means for removing the filter cake from filter cloth 60 such as doctor knife 101 disposed in a compartment in vat 10 is shown discharging the filter cake into a screw conveyor 102 which directs the filter cake out of vat 10 through outlet 104. Within each segment 44 is disposed a filter grid 50 to maintain filter cloth 60 spaced apart from drum 20. Filter cloth 60 is stretched over channel sections 40 and grids 50 and is retained in position by caulking bar 70 compressively inserted between channel sections 40 and by circumferential wires (not shown).

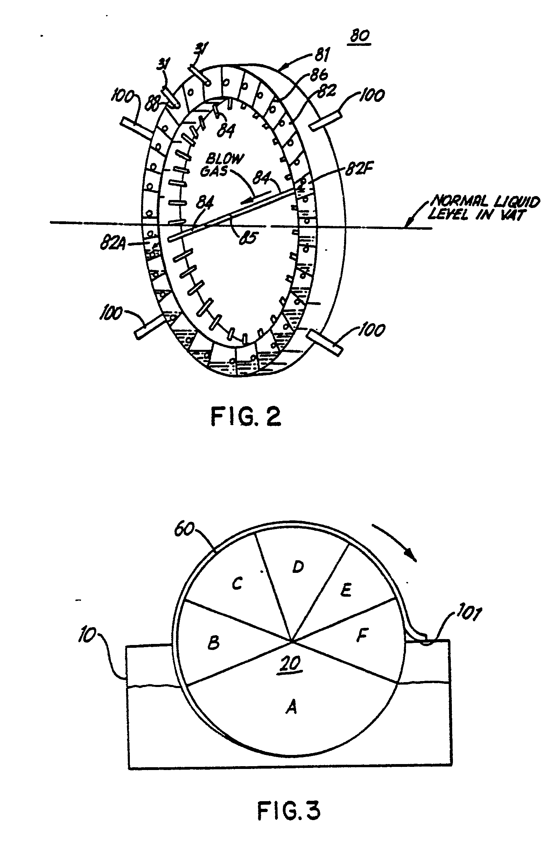

It has been found that the liquid remaining in lag conduit 31 tends to be blown to the ends of the conduit when blow gas is passed outwardly through the conduit while flow to conduit 30 simultaneously is blocked by means of trunion valve 24. Accordingly, liquid collection means 80, shown in Figure 2, somewhat simplified for clarity, should be in communication with at least a plurality of lag conduits 31, preferably in communication with a majority of lag conduits 31, and more preferably in communication with all lag conduits 31 to decrease the erosive effects of residual liquid on filter cloth 60 and to prevent residual liquid from being blown back into the filter cake. Collection means 80 preferably is disposed within drum 20 in communication with the termini of lag fluid conduits 31. Although it is within the contemplation of this invention that only one collection means 80 is utilized, it is anticipated that a plurality of collection means typically will be used, preferably having a substantially annular or toroidal configuration. In the preferred embodiment described herein, a pair of collection means 80 having an overall toroidal configuration are utilized, one disposed in drum 20 adjacent to each drum wall 26. Collection means 80 may be a separate body mounted in drum 20, or it may be formed by partitioning the internal area adjacent to wall 26 of drum 20. Where existing filters are to be adapted to use of the subject invention, there may not be sufficient room between the outermost circumferential rows of openings 32, 34 and drum walls 26 for collection means 80. In that event, a sufficient number of rows of circumferential openings adjacent to each end may be blocked off to provide sufficient room for installation of collection means 80, and lag conduits 31 may be modified to communicate with collection means 80 as hereinafter described.

The overall configuration of collection means 80 will be dependent upon the design of the filter means, the required liquid storage capacity in the collection means, and the space available within the filter drum 20 for installing the collection means. To simplify construction, collection means 80 preferably is of an overall annular shape, more preferably of an overall toroidal configuration.

Figure 2 shows collection means 80 comprising a generally toroidal vessel 81 having individual chambers 82, each chamber separated from the adjacent chamber by a partition 86. Each chamber 82 communicates with a terminus of lag fluid conduit 31 through chamber opening 88. Each chamber 82 also is provided with a vent means such as vent conduit 84 to permit alternate gas and liquid residence in each chamber 82 during each revolution of drum 20. Chambers 82 should be sized such that each chamber will contain all the residual liquid discharged through the respective terminus of lag fluid conduit 31 during each revolution by the blow gas. It may be desirable to brace vessel 81 to drum 20 by radially extending supports 100 communicating with vessel 81 and drum 20.

The method selected for venting chamber 82 is not critical provided that the venting is sufficient during all phases of filter operation. Adequate venting is particularly important in allowing gas to displace liquid from each chamber when the chamber is submerged in the slurry. One particularly effective method for venting individual chambers 82 is to connect each chamber, such as chamber 82A, to the generally diametrically opposite chamber such as chamber 82F, via the vent conduits 84 joined at 85, although other means for venting chambers 82 also may be effective. In this Figure, sections of all lag fluid conduits 31 and all but two vent conduits 84 have been omitted for clarity.

A typical filter for the separation of wax from lube oil has a filter drum 20, thirty feet in length and eleven and one-half feet in diameter. This drum has an effective filtering area of approximately 1000 square feet with thirty lag fluid conduits 31, $2\frac{1}{2}$ inches in diameter. In this embodiment, liquid collection means 80 may comprise two toroids fabricated from eight inch O.D. schedule 40 type 316 stainless steel approximately nine feet in diameter. The rings are partitioned into 30 substantially equivalent chambers 82, each chamber communicating with the terminus of a lag fluid conduit 31 and with the diametrically opposite chamber via vent conduit 84, which may be fabricated from small diameter thin-walled metal tubing, such as half inch diameter stainless steel tubing. Preferably tubing which is somewhat flexible should be used, since all vent conduits 84 will pass near the center of vessel 81.

The sectors of Figure 3 illustrate the varying operations performed simultaneously by a typical rotary filter such as that of Figure 1, which incorporate the subject invention. When a point on filter cloth 60 is in a position included within sector A, that point is under vacuum. Filtrate is drawn through filter cloth 60, circumferential openings 32 and 34 and fluid conduits 30 and 31, respectively, into a filtrate storage facility (not shown). The solid wax crystals are retained on filter cloth 60 and buildup to form a wax filter cake. Towards the end of this phase, blow gas passes from chamber 82F through vent conduit 84 into chamber 82A to pressurize chamber 82A momentarily, thereby forcing liquid in chamber 82A out of the chamber through lag conduit 31 into filtrate storage. As each point on filter cloth 60 rotates to sector B, that point rises out of the slurry. Vacuum continues to be applied to sector B to continue to draw any remaining filtrate through circumferential openings 32 and 34 and fluid conduits 30 and 31, respectively, thereby further drying the filter cake. Any remaining liquid in chamber 82A is forced from the chamber through lag conduit 31 by the combination of the pressure in chamber 82A and the vacuum in the lag conduit. When the point rotates still further to a position within sector C, valve means 24 continues evacuation of fluid conduits 30 and 31, while a wash fluid is sprayed through spray headers 92 in filter hood 90 to wash filtrate from the wax cake. At least a portion of the filtrate remaining on the wax cake as well as wash fluid passes through the wax cake, filter cloth 60, circumferential openings 32, 34 and fluid conduits 30, 31, respectively, for removal from the filter. The wash fluid generally comprises a liquid which is miscible with the filtrate but not with the solids of the filter cake. In the separation of lube oil from wax, this wash liquid frequently is a mixture of ketones or ketone/toluene. When the point on filter cloth 60 rotates to the position shown by sector D, the filter cake is again dried by discontinuing external wash flow and continuing to apply vacuum to sector D, which pulls wash from the wax cake through circumferential openings 32, 34, and fluid conduits 30, 31, respectively. As the point rotates still further to sector E, purge gas, typically having a velocity of about 100 feet/second, is supplied to lag fluid conduit 31 communicating with lag opening 34 while the immediately adjacent lead opening 32 continues to be maintained under vacuum. This serves to cause some of the liquid remaining in lag fluid conduit 31 communicating with lag opening 34 to flow into fluid conduit 30 communicating with lead opening 32. As the point rotates still further to sector F, lead opening 32 is no longer evacuated. The purge gas which is called blow gas at this point, forces at least a portion of the remaining liquid in fluid conduit 31 into a chamber 82F of liquid collection means 80. Blow gas also passes through vent conduit 84 to pressurize the diametrically opposite chamber 82A as previously described. Blow gas also contacts filter cloth 60, causing the cloth to billow out slightly, thereby facilitating the subsequent removal of the cake by doctor knife 101. It should be noted that if liquid collection means 80 were not installed in the subject filter, liquid remaining in conduits 31 would be conveyed by the high velocity purge gas against filter cloth 60 causing the cloth to erode, particularly at the ends of drum 30 where the liquid tends to collect.

The relative length of phases A—F is shown in Figure 3 for a typical filter. It is to be understood that the length of time that any given location on filter cloth 60 spends in a particular phase may be adjusted by varying the size of the sector devoted to that phase and by varying the rate of rotation of drum 20. In addition to decreasing the erosion rate of the filter cloth, use of the subject invention also may permit a decrease in the time required for phases E and/or F, thereby permitting an increase in the filtration time in each revolution.

Conversion of Units

Lengths expressed herein in feet are converted to metres by multiplying by 0.3408.

Lengths expressed in inches are converted to cm by multiplying by 2.54.

Areas expressed in square feet are converted to $m^2$ by multiplying by 0.0929.

## Claims

1. A continuous rotary drum vacuum filter means comprising:

(a) a filter vat (10) for containing a filterable slurry of liquids and solids up to a selected level;

(b) a rotatable filter drum (20) mounted with its axis horizontal for rotation about its axis with its upper part above the said selected level, the drum comprising a plurality of circumferentially-spaced filtering sectors or compartments (44) each having a plurality of openings (32, 34) at the periphery of the drum;

(c) means to rotate the drum (20) about its axis in a selected sense;

(d) each filtering sector or compartment (44) of the drum (20) having lead and lag conduits (respectively 30, 31) connected to respective sets of openings (32, 34) such that during rotation of the drum in the selected sense, the openings (32) connected to a lead conduit (30) of a sector (44) arrive at a given point before the openings (34) connected to the next successive lag conduit (31);

(e) valve means (24) for regulating the sequence and duration of the connection of the lead and lag conduits (30, 31) with a source of reduced pressure, a source of raised pressure, and with atmospheric pressure at respective angular intervals (A to F) during the rotation of the drum; and

(f) a plurality of liquid collection means (80), there being one liquid collection means (80) adjacent to each axial end of the filter drum communicating with at least a majority of said lag fluid conduits (31) for receiving liquid from said lag fluid conduits when gas at a raised pressure is admitted to the lag fluid conduits (31) at one selected rotational position or interval (F) of the drum (20), characterized in that the liquid collection means (80) communicates with vent means (84) separately from its communication with the said lag conduits (31) whereby liquid is dischargeable from the liquid collection means (80) via the vent means (84) under the influence of the gas at a raised pressure at another selected rotational position or interval (A) of the drum.

2. A filter means as in claim 1 in which each liquid collection means (80) comprises a generally annular vessel (81) divided into a plurality of circumferentially-adjacent chambers.

3. A filter means as in claim 2 in which each chamber (82) communicates with a lag conduit (31).

4. A filter means as in claim 2 or claim 3 in which each chamber (82) has a separate discharge vent (84) for the discharge of liquid therefrom.

5. A filter means as in claim 4 in which the discharge vent (84) of one chamber (82F) is connected to the discharge vent (84) of another chamber (82A) so that liquid from the said one chamber (82F) is discharged to the said other chamber (82A).

6. A filter means as in claim 5 in which the said one chamber (82F) and the said other chamber (82A) are at substantially diametrically opposite sides of a respective annular vessel (81).

7. A filter means of any one of claims 1 to 6 comprising a filter cloth (60) disposed over the peripheral openings (32, 34) on the filter drum, and means (101) for removing filter cake formed on the filter cloth, whereby, over one angular interval of each rotation of the filter drum (during operation), slurry from the vat is drawn onto the filter cloth with at least a portion of the filtrate passing through the openings into the said conduits while filtered solids form a filter cake on the filter cloth, and over another angular interval of each rotation, the filter cake is removed from the cloth.

## Patentansprüche

1. Vakuumfiltereinrichtung mit einer zusammenhängenden Drehtrommel mit:

(a) einem Filterbottich (10) für die Aufnahme eines filterbaren Schlammes von Flüssigkeiten und Feststoffen bis zu einem vorgegebenen Niveau;

(b) einer drehbaren Filtertrommel (20), die mit ihrer Horizontalachse um ihre Achse drehbar montiert ist, wobei sich ihr oberer Teil über dem vorgewählten Niveau befindet und wobei die Trommel eine Anzahl von über den Umfang beabstandeten Filterabschnitten oder Abteilen (44) aufweist, die jeweils eine Anzahl von Öffnungen (32, 34) am Umfang der Trommel haben;

(c) einem Mittel zum Drehen der Trommel (20) um ihre Achse in einem vorgewählten Sinn;

(d) wobei jeder Filterabschnitt oder jedes Abteil (44) der Trommel (20) vordere und hintere Leitungen (beispielsweise 30, 31) aufweist, die an jeweilige Gruppen von Öffnungen (32, 34) derart angeschlossen sind, daß während der Drehung der Trommel in dem vorgewählten Sinn die an eine vordere Leitung (30) eines Sektors (44) angeschlossen Öffnungen (32) an einer bestimmten Stelle vor den Öffnungen (34) ankommen, die an die nächstfolgende hintere Leitung (31) angeschlossen sind;

(e) einer Ventileinrichtung (24) zur Regelung der Folge und Dauer des Anschlusses der vorderen und hinteren Leitungen (30, 31) an eine Quelle von vermindertem Druck, an eine Quelle von erhöhtem Druck und an atmosphärischen Druck

bei jeweiligen Winkelstellungen (A—F) während der Drehung der Trommel; und

(f) einer Anzahl von Flüssigkeitssammelanschlüssen (80), von denen ein Flüssigkeitssammelanschluß (80) in der Nähe jedes axialen Endes der Filtertrommel mit mindestens einer Mehrzahl der hinteren Fluidleitungen (31) in Strömungsverbindung steht, um Flüssigkeit von den hinteren Fluidleitungen aufzunehmen, wenn Gas bei erhöhtem Druck in die hinteren Fluidleitungen (31) bei einer ausgewählten Drehstellung oder Interval (F) der Trommel (20) eingeleitet wird, dadurch gekennzeichnet, daß der Flüssigkeitssammelanschluß (80) mit einer Ablaßeinrichtung (84) getrennt von seiner Strömungsverbindung mit den hinteren Leitungen (31) in Strömungsverbindung steht, wodurch Flüssigkeit aus dem Flüssigkeitssammelanschluß (80) über die Ablaßeinrichtung (84) unter dem Einfluß des unter erhöhtem Druck stehenden Gases an einer anderen ausgewählten Drehstellung oder Intervall (A) der Trommel ablaßbar ist.

2. Filtereinrichtung nach Anspruch 1, dadurch gekennzeichnet, daß jeder Flüssigkeitssammelanschluß (80) ein im allgemeinen ringförmiges Gefäß (81) aufweist, das in eine Anzahl von Kammern unterteilt ist, die am Umfang benachbart sind.

3. Filtereinrichtung nach Anspruch 2, dadurch gekennzeichnet, daß jede Kammer mit einer hinteren Leitung (31) in Srömungsverbindung steht.

4. Filtereinrichtung nach Anspruch 2 oder 3, dadurch gekennzeichnet, daß jede Kammer eine getrennte Auslaßöffnung (84) für das Ausstoßen von Flüssigkeit aufweist.

5. Filtereinrichtung nach Anspruch 4, dadurch gekennzeichnet, daß die Auslaßleitung (84) einer Kammer (82F) an die Auslaßleitung (84) einer anderen Kammer (82A) derart angeschlossen ist, daß Flüssigkeit von der einen Kammer (82F) in die andere Kammer (82A) abgegeben wird.

6. Filtereinrichtung nach Anspruch 5, dadurch gekennzeichnet, daß die eine Kammer (82F) und die andere Kammer (82A) an im wesentlichen diametral gegenüberliegenden Seiten eines jeweiligen ringförmigen Gefäßes (81) angeordnet sind.

7. Filtereinrichtung nach einem der Ansprüche 1 bis 6, dadurch gekennzeichnet, daß ein Filtertuch (60) über den peripheren Öffnungen (82, 84) auf der Filtertrommel angeordnet ist, und daß Mittel (101) zum Abnehmen des auf dem Filtertuch gebildeten Filterkuchens vorgesehen sind, wodurch über ein Drehwinkelintervall der Filtertrommel (während des Betriebs) Schlamm aus dem Bottich auf das Filtertuch gezogen wird und wobei zumindest ein Teil des Filtrats durch die Öffnungen in die Leitungen eintritt, während gefilterte Feststoffe einen Filterkuchen auf den Filtertuch ergeben und wobei während eines anderen Drehwinkelintervalls der Filterkuchen von dem Tuch entfernt wird.

**Revendications**

1. Dispositif de filtrage continu à dépression, à tambour rotatif, comprenant:

(a) une cuve de filtre (10) destinée à contenir une boue pouvant être filtrée, de liquides et de substances solides, jusqu'à un niveau choisi;

(b) un tambour filtrant rotatif (20), dont l'axe horizontal est monté de manière que ce tambour tourne autour de son axe de sorte que sa partie supérieure soit située au-dessus dudit niveau choisi, le tambour comprenant une pluralité de secteurs ou compartiments filtrants (44) espacés circonférentiellement et dont chacun comporte une pluralité d'ouvertures (32, 34) au niveau de la périphérie du tambour;

(c) des moyens pour faire tourner le tambour (20) autour de son axe dans un sens choisi;

(d) chaque secteur ou compartiment filtrant (44) du tambour (20) comportant des canalisations avant et arrière (respectivement 30, 31) raccordées à des ensembles respectifs d'ouverture (32, 34) de telle sorte que, pendant la rotation du tambour dans le sens choisi, les ouvertures (32) raccordées à une canalisation avant (30) d'un secteur (44) arrivent un instant donné avant les ouvertures (34) raccordées à la canalisation arrière immédiatement suivante (31);

(e) des moyens en forme de valve (24) servant à régler la séquence et la durée du raccordement des canalisations avant et arrière (30, 31) à une source de pression réduite, à une source de pression accrue et à la pression atmosphérique à des intervalles angulaires respectifs (A à F) pendant la rotation du tambour; et

(f) une pluralité de moyens (80) de collecte de liquide, l'un des moyens (81) de collecte de liquide étant voisin de chaque extrémité axiale du tambour filtrant et communiquant avec au moins une majorité desdites canalisations de fluide avant (31) pour recevoir le liquide provenant desdites canalisations de fluide avant lorsque le gaz soumis à une pression accrue est admis dans les canalisations de fluide arrière (31) dans une position ou un intervalle de rotation (F) choisi du tambour (20),

caractérisé en ce que les moyens (80) de collecte du liquide communiquent avec des moyens d'aération (84), séparément de la communication avec lesdites canalisations arrière (31), ce qui a pour effet que du liquide peut être refoulé hors des moyens (80) de collecte de liquide par l'intermédiaire des moyens d'aération (84), sous l'influence du gaz soumis à une pression accrue, dans une autre position ou intervalle de rotation (A) choisi du tambour.

2. Dispositif de filtrage selon la revendication 1, dans lequel chacun des moyens (80) de collecte de liquide comporte une enceinte de forme générale annulaire (81) subdivisée en une pluralité de chambres voisines circonférentiellement 82.

3. Dispositif de filtrage selon la revendication 2, dans lequel chaque chambre (82) communique avec une canalisation arrière (31).

4. Dispositif de filtrage selon la revendication 2 ou 3, dans lequel chaque chambre (82) comporte un orifice séparé de refoulement (84) pour le refoulement du liquide hors de la chambre.

5. Dispositif de filtrage selon la revendication 4, dans lequel l'orifice de refoulement (84) d'un première chambre (82F) est raccordée à l'orifice de refoulement (84) d'une autre chambre (82A) de sorte que le liquide sortant de ladite première chambre (82F) est refoulé dans ladite autre chambre (82A).

6. Dispositif de filtrage selon la revendication 5, dans lequel ladite première chambre (82F) et ladite autre chambre (82A) sont situées sur des côtés essentiellement diamétralement opposés d'une enceinte annulaire respective (81).

7. Dispositif de filtrage selon l'une quelconque des revendications 1 à 6, comprenant un tissu filtrant (60) disposé au-dessus des ouvertures périphériques (32, 34) sur le tambour filtrant, et des moyens (100) servant à éliminer le gâteau de filtre formé sur le tissu filtrant, ce qui a pour effet que, sur un intervalle angulaire de chaque rotation du tambour filtrant (pendant le fonctionnement), la boue provenant de la cuve est entraînée sur le tissu filtrant, de telle sorte qu'au moins une partie du filtrat pénètre, en traversant les ouvertures, dans lesdites canalisations tandis que les substances solides filtrées forment un gâteau de filtre sur le tissu filtrant et que sur un autre intervalle angulaire de chaque rotation, le gâteau de filtre est éliminé du tissu.

FIG.1

FIG. 2

FIG. 3